# EUROPÄISCHE PATENTSCHRIFT

(11) **EP 1 288 555 B1**
(45) Veröffentlichungstag und Bekanntmachung des Hinweises auf die Patenterteilung: **28.09.2005**
(21) Anmeldenummer: 02015276.5
(22) Anmeldetag: 09.07.2002
(51) Int. Cl.: F16L 23/032

(54) **Montageflansch für Rohrverbindungen**
Flange for pipe connections
Bride pour raccords de tuyauterie

(30) Priorität: 28.08.2001 DE 10141944
(43) Veröffentlichungstag der Anmeldung: 05.03.2003
(73) Patentinhaber: Bayerische Motoren Werke Aktiengesellschaft, 80809 München (DE)
(72) Erfinder: Brich, Jürgen, 86169 Augsburg (DE); Hägele, Martin, 73560 Böbingen/Rems (DE)

(56) Entgegenhaltungen:
- DE-A- 4 031 837
- DE-A- 19 920 822
- FR-A- 1 024 183
- US-A- 2 847 820
- US-A- 3 179 449
- US-A- 5 230 540

## Beschreibung

Die Erfindung betrifft einen Montageflansch für Rohrverbindungen gemäß der im Oberbegriff des Patentanspruchs 1 genannten Merkmale.

Zum technischen Umfeld wird beispielsweise auf die französische Offenlegungsschrift FR-A-1024183 verwiesen. In dieser ist ein Montageflansch beschrieben, dessen Montageoberfläche im Bereich einer Hinterschneidung ballig ist. Durch diese Ausgestaltung wird nach dem Verschrauben des Flansches eine gleichmäßige Druckverteilung über die Montagefläche erzielt.

Als nächstliegender Stand der Technik wird die US Patentschrift 3,179,449 angesehen. Diese beschreibt einen Montageflansch für eine Rohrverbindung, beispielsweise für den Abgasstrang einer Brennkraftmaschine, bestehend aus einem schalenförmigen Blechpressteil, dessen außenliegende Bodenfläche eine einem Abgasflansch zuwendbare Montagefläche ist und zumindest eine Durchgangsbohrung für eine Abgasleitung und zumindest zwei Befestigungsbohrungen aufweist, wobei der Montageflansch ein separates Bauteil ist und der äußere Rand des Montageflansches weitgehend radial zur Montagebohrungsachse umgeformt ist.

Nachteilig bei der vorliegenden Ausgestaltung ist eine mangelhafte, langfristige mechanische Stabilität bei starken Temperaturwechseln.

Aufgabe der vorliegenden Erfindung ist es, einen Montageflansch aufzuzeigen, der auch bei starken Temperaturschwankungen langfristig eine äußerst stabile mechanische Einheit bildet.

Diese Aufgabe wird durch die Merkmale im kennzeichnenden Teil des Patentanspruchs 1 dadurch gelöst, dass die Montagefläche konvex gewölbt ist und die Montagefläche in der Schale koaxial zu jeder Befestigungsbohrung eine Distanzhülse aufweist, wobei die Distanzhülse über die Montagefläche höchstens um das Maß der Dicke eines Dichtelementes herausragt, wobei das Dichtelement zwischen der Montagefläche und dem Zylinderkopf angeordnet sein kann. Weiter liegt die Distanzhülse nach der Montage des Montageflanschs auf dem Zylinderkopf auf. Da für die Dichtung ein Material mit einem größeren Ausdehnungskoeffizienten verwendet werden kann als für den Montageflansch und das Abgasrohr, dichtet das Dichtelement bei steigender Temperatur aufgrund seiner Wärmeausdehnung noch besser ab. In vorteilhafter Weise addieren sich die Dichtwirkungen von der ballig konvexen Montagefläche und der Dickenveränderung des Dichtungselementes. Insgesamt wird mit der vorgeschlagenen Ausgestaltung ein Montageflansch mit einer größeren Struktursteifigkeit erzielt, der die gestellte Aufgabe löst.

Durch die erfindungsgemäße Ausgestaltung des Montageflansches erhält die Montagefläche eine Elastizität, d. h. der Montageflansch selbst erhält eine Federwirkung. Durch die bei der Montage erzeugte Kraftspeicherung bleibt die Vorspannung auf der Dichtfläche, auch bei stark alternierenden Temperatur, über eine lange Zeit, d. h. über viele Jahre, konstant. Durch die Verwendung von spezifischen Bimetallen, beispielsweise von miteinander hochtemperaturgelöteten austenitischen und/und ferritischen Blechen, erhöht sich bei Zunahme der Temperatur die Biegespannung. Damit wird die Kraftbeaufschlagung der Dichtung im Gegensatz zu herkömmlichen Massiv- oder Leichtbauverbindungen noch erhöht bzw. sogar steuerbar. Ferner wird durch die erfindungsgemäße Ausgestaltung die Montage des Montageflansches am Zylinderkopf erheblich erleichtert. Der Flansch des Abgasrohrs ist durch die erfindungsgemäße Ausgestaltung in vorteilhafter Weise in der Montageebene schwimmend gelagert.

Da der Montageflansch durch einfache Blechumformung hergestellt wird, ist die Fertigung darüber hinaus sehr kostengünstig. Da bei der konstruktiven Ausgestaltung des Montageflansches auf Verstärkungsmaßnahmen verzichtet werden kann, wird ein sehr geringes Gewicht erreicht. Da keine schweißtechnische Verbindung notwendig ist, können kostengünstige, hochfeste Stähle wie z. B. Federstahlbleche für den Montageflansch verwendet werden. Durch diese Maßnahmen können wiederum die Materialquerschnitte bezüglich den herkömmlichen Leichtbauflanschen verringert werden.

Im Folgenden wird ein bevorzugtes Ausführungsbeispiel anhand von zwei Figuren näher erläutert.
- Fig. 1: zeigt eine dreidimensionale Aufsicht auf einen Montageflansch,
- Fig. 2: zeigt einen Schnitt durch einen Montageflansch.

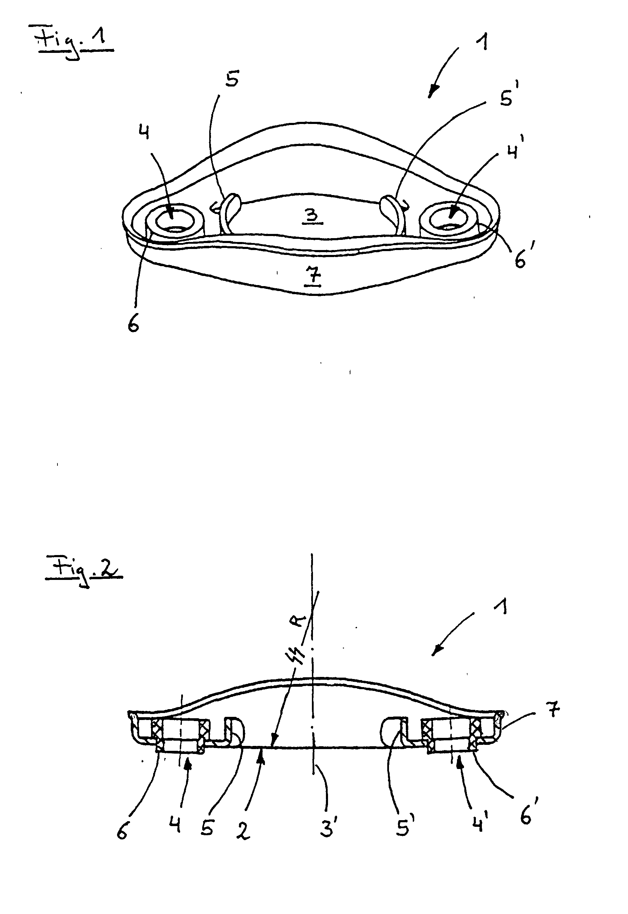

Fig. 1 zeigt eine dreidimensionale Darstellung eines schalenförmigen Montageflansches 1 mit Blick in die Schale für eine Rohrverbindung. Der Montageflansch 1 weist in der Schale eine Bodenfläche auf, in der eine Durchgangsbohrung 3 sowie zwei weitere Befestigungsbohrungen 4, 4' erkennbar sind. Koaxial zu der Durchgangsbohrung 3 sind zwei Führungen 5, 5' erkennbar. Koaxial zu den Befestigungsbohrungen 4, 4' sind jeweils eine Distanzhülse 6, 6' befestigt. Die Führungen 5, 5' und die Distanzhülsen 6, 6' sind von einem Rand 7 der Schale umgeben. Der Außenrandbereich des Randes 7 ist wiederum nach außen, weitestgehend normal zur Durchgangsbohrungsachse 3' umgeformt.

Der Montageflansch 1 ist im wesentlichen ein einziges Blechpressteil, an das die zwei Distanzstücke 6, 6' befestigt sind. Der Montageflansch ist aus einem ferritischen Werkstoff gefertigt, kann jedoch auch aus anderen hochtemperaturfesten Metall-Legierungen oder aus Bi-Metallen hergestellt werden. Die Distanzhülsen 6, 6' wurden in dem Ausführungsbeispiel in die Befestigungsbohrungen 4, 4' eingepresst, sie können jedoch auch durch Widerstandsschweißen bzw. Reibschweißen an den Montageflansch 1 angefügt werden.

In Fig. 2, für die dieselben Bezugszeichen wie für Fig. 1 gelten, ist ein Schnitt des Montageflanschs 1 zentrisch zur Durchgangsbohrung 3 und zu den Befestigungsbohrungen 4, 4' dargestellt. In dieser Darstellung ist in der Mitte des Montageflansches 1 die Durchgangsbohrung 3 gut erkennbar.

Die bei der Blechumformung mit eingearbeiteten Führungen 5, 5' sind koaxial zur Durchgangsbohrungsachse 3' umgeformt. Die Distanzhülsen 6, 6' sind in die Befestigungsbohrungen 4, 4' eingepresst. Sie sind zwischen der Führung 5 und dem Rand 7 bzw. der Führung 5' und dem Rand 7 angeordnet. Die Distanzhülsen 6, 6' ragen über die Oberfläche der Montagefläche 2 heraus. Der äußere Randbereich 7 ist, wie in Fig. 1 bereits beschrieben, weitestgehend normal zur Durchgangsbohrungsachse 3' umgeformt. Die Montagefläche 2 ist leicht konvex gewölbt, der Radius beträgt ein Vielfaches des Durchmessers der Durchgangsbohrung 3.

Vor der Montage des Montageflansches 1 an einem hier nicht dargestellten Zylinderkopf wird eine ebenfalls nicht dargestellte Abgasleitung durch die Durchgangsbohrung 3 in Richtung der Montagefläche 2 gesteckt und das Ende der Abgasleitung nach außen umgeformt, hier gebördelt. Der Außendurchmesser des hierbei entstehenden Abgasleitungsflansch ist kleiner als die Beabstandung der Distanzhülsen 6, 6' voneinander. Bei der Verbauung des Montageflansches 1 an einem Zylinderkopf, wird zwischen Zylinderkopf und Flansch eine Flachdichtung eingelegt. Anschließend wird der Montageflansch 1 mit zwei hier nicht dargestellten Befestigungselementen, im Ausführungsbeispiel zwei Schrauben, an den Zylinderkopf angeschraubt. Aufgrund der konvex gewölbten Montagefläche 2 wird gezielt eine Vorspannung von dem Montageflansch 1 auf den Flansch der Abgasleitung aufgebracht. Durch die erfindungsgemäße Ausgestaltung ist die Abgasleitung in der Durchgangsbohrung 3 schwimmend gelagert. Vibrationen, Wärmedehnungen, Montagespannungen usw. in der Ebene der Montagefläche werden bei dieser Anordnung durch die schwimmende Lagerung nahezu vollständig eliminiert. Die Ausgestaltung des Randes 7 als schalenförmiges Blechpressteil mit unterschiedlicher Höhe des Randes 7 und zugleich des umgeformten Randbereichs des Randes 7, erhält der Montageflansch 1 eine hohe Struktursteifigkeit. Diese Steifigkeit wird benötigt, um eine möglichst gleichmäßige Federwirkung der konvex gewölbten Montagefläche 2 zu erhalten.

Der Montageflansch 1 ist in dem dargestelten Ausführungsbeispiel aus einem ferritischen Blech gefertigt, kann jedoch optional auch aus spezifischen Bimetallen, beispielsweise miteinander hochtemperaturgelötetetes austenitisches und ferritisches Blech, hergestellt werden. Durch diese Maßnahme erhöht sich bei Zunahme der Temperatur die Biegespannung. Somit wird die Kraftbeaufschlagung der Dichtung im Gegensatz zu herkömmlichen massiven oder Leichtbauflanschverbindungen noch erhöht bzw. über die Temperatur steuerbar. Da zwischen Abgasleitung und Montageflansch keine stoffschlüssige Verbindung vorliegt, ist die Wärmeleitung gegenüber einer stoffschlüssigen Verbindung deutlich reduziert. Dies hat zur Folge, dass bei Betrieb der Brennkraftmaschine weniger Wärme vom Auspuff an den Zylinderkopf geleitet wird, wodurch der Wärmeeintrag in das Kühlsystem der Brennkraftmaschine über die Montageflansche der Auspuffkrümmer deutlich reduziert ist. Während das Kühlsystem der Brennkraftmaschine somit thermisch entlastet wird, wird die thermische Energie gleichzeitig zur Aufheizung des Katalysators verwendet. Hierdurch reduziert sich die Anspringzeit des Katalysators, wodurch der Schadstoffausstoß deutlich reduziert wird.

### Bezugszeichenliste

- 1: Montageflansch
- 2: Montagefläche
- 3: Durchgangsbohrung
- 3': Bohrungsachse
- 4, 4': Befestigungsbohrung
- 5, 5': Führung
- 6, 6': Distanzhülse
- 7: Rand

## Patentansprüche

1. Montageflansch (1) für eine Rohrverbindung, insbesondere für eine Brennkraftmaschine mit einer an einem Zylinderkopf angeordneten Abgasleitung, aus einem schalenförmigen Blechpressteil, dessen außenliegende Bodenfläche eine dem Zylinderkopf zuwendbare Montagefläche (2) ist und zumindest eine Durchgangsbohrung (3) für eine Abgasleitung und zumindest zwei Befestigungsbohrungen (4, 4') aufweist, wobei der Montageflansch (1) ein separates Bauteil ist und der äußere Rand (7) des Montageflansches (1) weitgehend radial zur Montagebohrungsachse (3') umgeformt ist,
**dadurch gekennzeichnet, dass** die Montagefläche (2) konvex gewölbt ist und die Montagefläche (2) in der Schale koaxial zu jeder Befestigungsbohrung (4, 4') eine Distanzhülse (6, 6') aufweist, wobei die Distanzhülse (6, 6') über die Montagefläche (2) höchstens um das Maß der Dicke eines Dichtelementes herausragt, wobei das Dichtelement zwischen der Montagefläche (2) und dem Zylinderkopf angeordnet sein kann.

2. Montageflansch für eine Rohrverbindung nach Anspruch 1,
**dadurch gekennzeichnet, dass** die Distanzhülse (6, 6') durch Einpressen oder Reibschweißen oder Widerstandsschweißen in der Befestigungsbohrung (4,4') befestigt ist.

3. Montageflansch für eine Rohrverbindung nach einem der zuvor genannten Ansprüche,
**dadurch gekennzeichnet, dass** der Montageflausch so ausgebildet ist, dass die Abgasleitung in die Durchgangsbohrung (3) einschiebbar ist.

4. Montageflansch für eine Rohrverbindung nach einem der zuvor genannten Ansprüche,
**dadurch gekennzeichnet, dass** der Durchmesser der Durchgangsbohrung (3) um 0,2 mm bis 5 mm größer als der Durchmesser der Abgasleitung ist.

5. Montageflansch für eine Rohrverbindung nach einem der zuvor genannten Ansprüche,
**dadurch gekennzeichnet, dass** in der Schale am äußeren Umfang der Durchgangsbohrung (3) das Blechpressteil zu zumindest einer, im Gebrauch zur Abgasleitung koaxial ausgerichteten, radialen Führung (5, 5') umgeformt ist.

## Claims

1. An assembly flange (1) for a pipe joint, especially for an internal combustion engine with an exhaust pipe mounted on a cylinder head, the flange comprising a dish-like sheet-metal pressed part, the outer base surface of which is an assembly surface (2) for facing the cylinder head, also comprising at least one through bore (3) for an exhaust pipe and at least two fastening bores (4, 4'), wherein the assembly flange (1) is a separate component and the outer edge (7) of the assembly flange (1) is bent substantially radially relative to the axis (3') of the assembly bore,
**characterised in that** the assembly surface (2) is convex and that the assembly surface (2) has a spacer sleeve (6, 6') coaxial with each fastening bore (4, 4') in the dish, wherein the spacer sleeve (6, 6') projects above the assembly surface (2) by not more than the thickness of a sealing element, the sealing element being mountable between the assembly surface (2) and the cylinder head.

2. An assembly flange for a pipe joint according to claim 1, **characterised in that** the spacer sleeve (6, 6') is fastened in the fastening bore (4, 4') by forcing in or friction welding or resistance welding.

3. An assembly flange for a pipe joint according to any of the previous claims, **characterised in that** the assembly flange is so constructed that the exhaust pipe is insertable into the through bore (3).

4. An assembly flange for a pipe joint according to any of the preceding claims, **characterised in that** the diameter of the through bore (3) is about 0.2 mm to 5 mm greater than the diameter of the exhaust pipe.

5. An assembly flange for a pipe joint according to any of the preceding claims, **characterised in that** on the outer periphery of the through bore (3) the sheet-metal part in the dish is converted into at least one radial guide (5, 5') which in operation is aligned coaxially with the exhaust pipe.

## Revendications

1. Bride de montage (1) pour un raccord de tubes, notamment pour un moteur à combustion interne avec une conduite de gaz d'échappement disposée sur une culasse, comprenant une pièce estampée en tôle en forme de coque dont la surface de fond extérieure est une surface de montage (2) pouvant être attribuée à la culasse et qui présente au moins un alésage traversant (3) pour une conduite de gaz d'échappement et au moins deux alésages de fixation (4, 4'), la bride de montage (1) étant un composant séparé et le bord (7) extérieur de la bride de montage (1) étant plié pour l'essentiel radialement par rapport à l'axe d'alésage de montage (3'),
**caractérisée en ce que**
la surface de montage (2) est convexe et présente dans la coque une douille d'écartement (6, 6') coaxiale à chaque alésage de fixation (4, 4'), qui saille de la surface de montage (2) au maximum de la valeur de l'épaisseur d'un élément d'étanchéité qui peut être disposé entre la surface de montage (2) et la culasse.

2. Bride de montage pour un raccord de tubes selon la revendication 1,
**caractérisée en ce que**
la douille d'écartement (6, 6') est fixée dans l'alésage de fixation (4, 4') par enfoncement par pression ou soudage par friction ou soudage par résistance.

3. Bride de montage pour un raccord de tubes selon l'une quelconque des revendications précédentes,
**caractérisée en ce que**
la bride de montage est configurée pour permettre de faire glisser la conduite de gaz d'échappement dans l'alésage traversant (3).

4. Bride de montage pour un raccord de tubes selon l'une quelconque des revendications précédentes,
**caractérisée en ce que**
le diamètre de l'alésage traversant (3) est supérieur de 0,2 mm à 5 mm au diamètre de la conduite de gaz d'échappement.

5. Bride de montage pour un raccord de tubes selon l'une quelconque des revendications précédentes,
**caractérisée en ce que**
dans la coque, au niveau de la périphérie extérieure de l'alésage traversant (3), la pièce estampée en tôle est transformée en au moins un guidage radial (5, 5') orienté coaxialement à la conduite de gaz d'échappement pendant le fonctionnement.
